# EUROPEAN PATENT APPLICATION

(11) **EP 4 831 601 A1**
(43) Date of publication of application: **28.10.2026**
(21) Application number: 24923472.5
(22) Date of filing: 22.11.2024
(51) Int. Cl.: G01K 1/143, G01K 1/14, G01K 13/00

(54) **HOUSING OF TEMPERATURE SENSOR, TEMPERATURE SENSOR, BATTERY, AND ELECTRIC APPARATUS**

(30) Priority: 07.02.2024 CN 202420288953 U
(71) Applicant: Contemporary Amperex Technology Co., Limited, Ningde, Fujian 352100 (CN)
(72) Inventor: ZHAO, Yiran, Ningde, Fujian 352100 (CN); GAN, Weifeng, Ningde, Fujian 352100 (CN)
(74) Representative: Lorenz Seidler Gossel Part. mbB
(86) International application number: PCT/CN2024/133932
(87) International publication number: WO 2025/167270

(57) **Abstract**

The present application discloses a housing of a temperature sensor, a temperature sensor, a battery, and an electric apparatus. The housing of a temperature sensor comprises: a body portion, wherein an accommodating space is formed inside the body portion, an opening is formed in one end of the body portion, and the opening is communicated with the accommodating space; and a connecting portion located outside the body portion and connected to the body portion, wherein the connecting portion and the body portion jointly define a slot structure, a connecting structure is formed on the inner surface of the wall of the slot, and the connecting structure is used for limiting the movement of the body portion in the insertion direction of the slot structure. The slot structure of the housing is connected to a tab by means of insertion, and a part of the tab is located in the slot. Compared with the structure in which the housing is mounted on one side of the tab, the mounting space on two sides of the tab can be fully utilized to mount the housing, so as to save the mounting space.

## Description

### CROSS-REFERENCE TO RELATED APPLICATION

The present application claims priority to Chinese Patent Application No. 202420288953.1, filed on February 7, 2024 and entitled "HOUSING FOR TEMPERATURE SENSOR, TEMPERATURE SENSOR, BATTERY, AND ELECTRIC DEVICE", the content of which is incorporated herein by reference in its entirety.

### TECHNICAL FIELD

The present application relates to the technical field of batteries, and in particular, to a housing for a temperature sensor, a temperature sensor, a battery, and an electric device.

### BACKGROUND

This section merely provides background information related to the present disclosure, which does not necessarily constitute the prior art.

When a battery is in operation, the temperature of the battery needs to be monitored. When a temperature sensor is arranged on a busbar (an electrical connection component between two battery cells) inside the battery, a battery cell is below the busbar, an insulating cover is above the busbar, and the insulating cover and an end cover of the battery cell are positioned at a small spacing from the busbar. Thus, the mounting of the temperature sensor is inconvenient due to the limitation of spaces above and below the busbar.

### SUMMARY

In view of the above problems, the present application provides a housing for a temperature sensor, a temperature sensor, a battery, and an electric device.

A first aspect of the present application provides a housing for a temperature sensor. The housing for the temperature sensor includes:
a body part, where an accommodating space is formed inside the body part, an opening is formed at one end of the body part, and the opening is in communication with the accommodating space; and
a connecting part located outside the body part and connected to the body part, where the connecting part and the body part jointly define, in an enclosing manner, a slot structure, a connecting structure is formed on an inner surface of a slot wall of the slot structure, and the connecting structure is configured to connect to a target connecting member to limit a movement of the body part in an insertion direction of the slot structure relative to the target connecting member.

During the mounting of the housing, the target connecting member may be a busbar of the battery, and the slot structure of the housing is connected to the busbar by means of insertion, such that a part of the busbar is located in the slot. Compared with the structure in which the housing is mounted on one side of the busbar, this configuration can fully utilize the mounting space on two sides of the busbar to mount the housing, so as to save the mounting space.

In some embodiments, the connecting part includes a first connecting part and a second connecting part; the first connecting part is connected to the body part, and one end, facing away from the body part, of the first connecting part is connected to the second connecting part; the first connecting part, the second connecting part, and the body part jointly define, in an enclosing manner, the slot structure; and in the insertion direction of the slot structure, the connecting structure and the first connecting part are spaced apart from each other.

When the slot structure of the housing is connected to the busbar by means of insertion, the second connecting part and the body part are located on the two sides of the busbar. The second connecting part may be disposed between the busbar and the insulating cover, and the body part may be disposed between the busbar and the battery cell; alternatively, the second connecting part may be disposed between the busbar and the battery cell, and the body part may be disposed between the busbar and the insulating cover, such that the housing can fully utilize the space on the two sides of the busbar, thereby improving the space utilization rate. Meanwhile, the first connecting part can limit the insertion depth of the slot structure. That is, when the slot structure is inserted to the maximum depth, the first connecting part abuts against one edge of the busbar to enable the housing to be mounted at a predetermined position of the busbar, thereby facilitating the connection between the housing and the busbar.

In some embodiments, the connecting structure is formed on a surface, facing the body part, of the second connecting part, or the connecting structure is formed on a surface, facing the second connecting part, of the body part. Compared with the structure in which the connecting structure is formed on the first connecting part, this configuration is more convenient for connecting the connecting structure to the busbar of the battery when applied to the battery.

In some embodiments, the connecting part includes two first connecting parts and two second connecting parts; the two first connecting parts are respectively located on two opposite sides of the body part, the two second connecting parts are respectively located on two opposite sides of the body part, the two first connecting parts are respectively connected to the body part, and each of the first connecting parts is connected to the second connecting part; on a same side of the body part, the first connecting part, the second connecting part, and the body part jointly define, in an enclosing manner, the slot structure; and in the insertion direction of the slot structure, the connecting structure and the first connecting part are spaced apart from each other.

When the housing is mounted to the busbar, a notch may be provided on one side edge of the busbar, and the housing is inserted into the notch via the slot structure. When the first connecting part abuts against the side edge of the busbar, the connection with the busbar is achieved via the connecting structure, and the connection with the busbar by means of insertion is achieved via the slot structure on two sides of the housing. Compared with the structure in which the housing is mounted on one side of the busbar, this configuration can fully utilize the space on the two sides of the busbar to mount the housing onto the busbar, thereby improving the space utilization rate.

In some embodiments, the body part includes a first portion and a second portion; the accommodating space is formed inside the first portion, the second portion is respectively connected to two sides of the first portion in a first direction, and the first direction is the same as a spacing direction of the two first connecting parts; on a same side of the body part, the first portion, the second portion, the first connecting part, and the second connecting part jointly define, in an enclosing manner, the slot structure; and in the insertion direction of the slot structure, the connecting structure and the first connecting part are spaced apart from each other.

Therefore, the slot structure formed on two sides of the body part may be connected to the busbar having the notch by means of insertion. In the thickness direction of the busbar, the two ends of the body part may be respectively located on the two sides of the busbar, and the space above and below the busbar can be utilized for mounting the housing. Compared with the structure in which the body part is mounted on one side of the busbar, this configuration can fully utilize the limited space on the two sides of the busbar to mount the housing, thereby improving the space utilization rate.

In some embodiments, the connecting structure is formed on a surface, facing the second portion, of the second connecting part, or the connecting structure is formed on a surface, facing the second connecting part, of the second portion. The connecting structure is disposed on the second connecting part to facilitate the fastening of the housing.

In some embodiments, the connecting structure includes a snap-fit protrusion.

During use, a snap groove may be provided on the surface of the busbar, and the snap-fit protrusion can be snapped into the snap groove of the busbar by utilizing the elastic deformation of the second connecting part. Therefore, by providing the snap-fit protrusion, rapid assembly and disassembly of the temperature sensor can be achieved, thereby facilitating the mounting and maintenance.

In some embodiments, a material of the connecting part includes an elastic material. Therefore, the snap-fit connection and disassembly of the snap-fit protrusion and the busbar can be achieved by utilizing the elastic deformation of the connecting part.

In some embodiments, the connecting structure includes a connecting hole, the connecting hole penetrates through the slot wall in which the connecting hole is located, and an axis of the connecting hole is arranged at an included angle with respect to the slot wall in which the connecting hole is located. Therefore, the housing may be snap-fitted onto the busbar of the battery via the snap-fit protrusion, or the connecting hole fastens the housing onto the busbar by using a screw, thereby facilitating the mounting and disassembly of the housing.

In some embodiments, the connecting structure includes a connecting hole, the connecting hole penetrates through the slot wall in which the connecting hole is located, and an axis of the connecting hole is arranged at an included angle with respect to the slot wall in which the connecting hole is located. Therefore, the housing may be snap-fitted onto the busbar of the battery via the snap-fit protrusion, or the connecting hole fastens the housing onto the busbar by using a screw, thereby facilitating the mounting and disassembly of the housing.

A second aspect of the present application provides a temperature sensor. The temperature sensor includes:
a temperature measurement component; and
the housing for the temperature sensor according to the first aspect, where the temperature measurement component is disposed in the accommodating space.

Since the temperature sensor includes the housing according to the first aspect, the resulting effects are the same as those described above and will not be repeated herein.

In some embodiments, the temperature sensor further includes an adhesive layer, the temperature measurement component and an inner wall of the body part are spaced apart from each other, and an adhesive layer is filled between the temperature measurement component and the inner wall of the body part.

Therefore, the temperature measurement component may be spaced apart from the body part via the adhesive layer, thereby protecting the temperature measurement component and enabling the temperature sensor to operate more reliably.

A third aspect of the present application provides a battery. The battery includes:
a battery cell;
a busbar, where the busbar is a target connecting member and is electrically connected to an electrode terminal of the battery cell; and
the temperature sensor according to the second aspect, where a part of the busbar is inserted into the slot structure and connected to the connecting structure, and the insertion direction of the slot structure is perpendicular to a thickness direction of the busbar.

The connecting structure includes a snap-fit protrusion, an embedded structure is formed on a surface of the busbar in the thickness direction of the busbar, and the snap-fit protrusion is located in the embedded structure.

Since the battery includes all the technical features of the above temperature sensor, the resulting effects are the same as those described above and will not be repeated herein.

In some embodiments, the connecting structure includes a snap-fit protrusion, an embedded structure is formed on a surface of the busbar in the thickness direction of the busbar, and the snap-fit protrusion is located in the embedded structure. Compared with the method of mounting the housing by means of screw connection, bonding, or the like, the snap-fit connection between the snap-fit protrusion and the busbar facilitates easier assembly and disassembly.

In some embodiments, the connecting part includes a first connecting part and a second connecting part; the first connecting part is connected to the body part, and one end, facing away from the body part, of the first connecting part is connected to the second connecting part; the first connecting part, the second connecting part, and the body part jointly define, in an enclosing manner, the slot structure; and in the thickness direction of the busbar, the second connecting part and the body part are located on the two sides of the busbar.

When the slot structure of the housing is connected to the busbar by means of insertion, the second connecting part and the body part are located on the two sides of the busbar. The second connecting part may be disposed between the busbar and the insulating cover, and the body part may be disposed between the busbar and the battery cell; alternatively, the second connecting part may be disposed between the busbar and the battery cell, and the body part may be disposed between the busbar and the insulating cover, such that the housing can fully utilize the space on the two sides of the busbar, thereby improving the space utilization rate. Meanwhile, the first connecting part can limit the insertion depth of the slot structure. That is, when the slot structure is inserted to the maximum depth, the first connecting part abuts against one edge of the busbar to enable the housing to be mounted at a predetermined position of the busbar, thereby facilitating the connection between the housing and the busbar.

In some embodiments, a notch is formed at one end of the busbar, a side edge of the notch includes two first side edges arranged opposite to each other, each first side edge is provided with the embedded structure, and the embedded structure includes a snap groove; the connecting part includes two first connecting parts and two second connecting parts, the two first connecting parts are respectively located on two opposite sides of the body part, the two second connecting parts are respectively located on two opposite sides of the body part, the two first connecting parts are respectively connected to the body part, and each of the first connecting parts is connected to the second connecting part; and on a same side of the body part, the first connecting part, the second connecting part, and the body part jointly define, in an enclosing manner, the slot structure, each of the first side edges is located in the slot structure, and the snap-fit protrusion is located in the snap groove.

When the housing is mounted to the busbar, a notch may be provided on one side edge of the busbar, and the housing is inserted into the notch via the slot structure. When the first connecting part abuts against the side edge of the busbar, the connection with the busbar is achieved via the connecting structure, and the connection with the busbar by means of insertion is achieved via the slot structure on two sides of the housing. Compared with the structure in which the housing is mounted on one side of the busbar, this configuration can fully utilize the space on the two sides of the busbar to mount the housing onto the busbar, thereby improving the space utilization rate.

A fourth aspect of the present application provides an electric device. The electric device includes the battery according to the third aspect. The battery is configured to provide electric energy for the electric device.

Since the electric device includes all the technical features of the above battery, the resulting effects are the same as those described above and will not be repeated herein.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

FIG. 1 is a schematic view of a vehicle as an electric device according to some embodiments of the present application;
FIG. 2 is a schematic view of an exploded structure of a battery according to some embodiments of the present application;
FIG. 3 is a schematic view of an exploded structure of a battery cell according to some embodiments of the present application;
FIG. 4 is an isometric view of a temperature sensor according to some embodiments of the present application;
FIG. 5 is a cross-sectional view of FIG. 4 along line A-A;
FIG. 6 is an isometric view of a temperature sensor according to some embodiments of the present application;
FIG. 7 is a cross-sectional view of FIG. 4 along line B-B;
FIG. 8 is an isometric view of a temperature sensor according to some embodiments of the present application;
FIG. 9 is an isometric view of a temperature sensor according to some embodiments of the present application;
FIG. 10 is an isometric view of a temperature sensor according to some embodiments of the present application;
FIG. 11 is an exploded view of a connection between a temperature sensor and a busbar in a battery according to some embodiments of the present application;
FIG. 12 is an isometric view of a busbar in a battery according to some embodiments of the present application;
FIG. 13 is an isometric view of a connection between a busbar and a temperature sensor in a battery according to some embodiments of the present application;
FIG. 14 is a partial cross-sectional view of a longitudinal section of a battery according to some embodiments of the present application, in which the longitudinal section is parallel to the thickness direction of a busbar and the spacing direction between two electrode terminals of a battery cell, respectively;
FIG. 15 is a partially enlarged view of I in FIG. 14;
FIG. 16 is a partial cross-sectional view of a longitudinal section of a battery according to some embodiments of the present application, in which the longitudinal section is parallel to the thickness direction of a busbar and the spacing direction between two electrode terminals of a battery cell, respectively; and
FIG. 17 is a partially enlarged view of II in FIG. 16.

The reference numerals are as follows:
1000: vehicle;
100: battery;
200: controller;
300: motor;
10: case; 11: lower case body; 12: upper cover;
20: battery cell; 21: end cover; 211: electrode terminal; 22: shell; 23: electrode assembly; 231: positive electrode tab; 232: negative electrode tab;
30: temperature sensor; 31: housing; 311: body part; 3111: first portion; 3112: second portion; 312: connecting part; 3121: first connecting part; 3122: second connecting part; 313: slot structure; 314: connecting structure; 3141: snap-fit protrusion; 3142: connecting hole; 32: adhesive layer; 33: temperature measurement component; 34: wire harness;
40: busbar; 41: embedded structure; 42: notch; 421: first side edge;
50: insulating cover;
60: connecting screw;
X: insertion direction; Y: thickness direction; Z: first direction.

### DETAILED DESCRIPTION

Embodiments of the technical solutions of the present application will be described in detail below with reference to the drawings. The following embodiments are merely used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, the technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings. They are merely for the convenience of describing the embodiments of the present application and simplifying the description, rather than indicating or implying that the device or element referred to must have a specific orientation or be constructed and operated in the specific orientation, and thus should not be construed as a limitation to the embodiments of the present application.

When a battery is in operation, the temperature of the battery needs to be monitored, and a temperature sensor is arranged on a busbar inside the battery. A plurality of battery cells are arranged inside the case of the battery. As a component connected in series or in parallel between two battery cells, the busbar may be equipped with a temperature sensor thereon to monitor the operating temperature of the battery. An insulating cover is arranged above the busbar, the insulating cover is located inside the case, the insulating cover lids the plurality of battery cells and is spaced apart from the busbar, and the spacing between the busbar and an end cover of the battery cell is small. If the temperature sensor is mounted between the busbar and the end cover, the small spacing will make the mounting inconvenient. However, if the temperature sensor is mounted between the insulating cover and the busbar, the height of the insulating cover will be increased, thereby increasing the space occupied by the case. Therefore, within a limited space, it is inconvenient to mount the temperature sensor due to the limitation of spaces above and below the busbar.

In view of this, the present application provides a housing for a temperature sensor. A slot structure is formed by a body part and a connecting part. In the thickness direction parallel to the busbar, the slot structure is connected to the busbar by means of insertion, such that a part of the busbar is located in the slot structure. This allows the housing to be mounted by utilizing limited spaces on two sides of the busbar, thereby improving the space utilization rate.

In addition to being used for temperature measurement of batteries, the temperature sensor according to the present application may be further used for temperature measurement of other apparatuses or electric appliances. For example, the temperature sensor may be used in, but is not limited to, devices such as air conditioners or heaters.

The embodiments of the present application provide an electric device. The electric device includes a battery. The battery is configured to provide electric energy for the electric device.

The electric device may include, but is not limited to, an electric toy, an electric tool, an electric bicycle, an electric vehicle, a ship, a spacecraft, and the like. The electric toy may include stationary or mobile electric toys, such as game consoles, electric car toys, electric ship toys, or electric airplane toys. The spacecraft may include airplanes, rockets, space shuttles, spaceships, and the like.

For ease of description, the following embodiments are illustrated by taking a vehicle 1000 as an example of the electric device according to some embodiments of the present application.

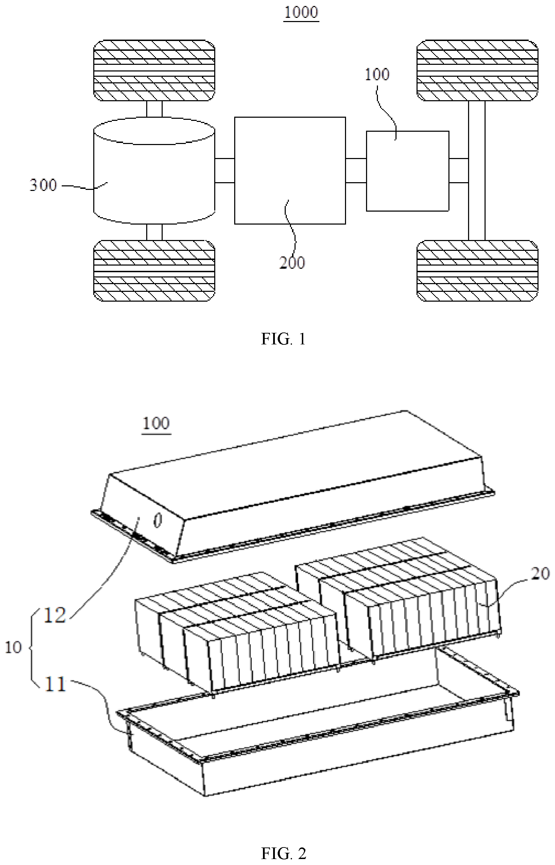

Referring to FIG. 1, FIG. 1 is a schematic structural view of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000, and the battery 100 may be disposed at the bottom, head, or tail of the vehicle 1000. The battery 100 may be configured to power the vehicle 1000. For example, the battery 100 may serve as an operation power source for the vehicle 1000. The vehicle 1000 may further include a controller 200 and a motor 300. The controller 200 is configured to control the battery 100 to power the motor 300, e.g., for the operation power needed by the vehicle 1000 for start-up, navigation, and driving. In some embodiments of the present application, the battery 100 may not only serve as an operation power source for the vehicle 1000, but also as a driving power source for the vehicle 1000 to, replacing or partially replacing, replacing or partially replacing fuel or natural gas, provide driving power for the vehicle 1000.

Referring to FIG. 2, FIG. 2 is an exploded view of a battery 100 according to some embodiments of the present application. The battery 100 includes a case 10 and at least one battery cell 20. The battery cell 20 is accommodated in the case 10. The case 10 is configured to provide an accommodating space for the battery cell 20, and the case 10 may be of various structures. In some embodiments, the case 10 may include a lower case body 11 and an upper cover 12. The lower case body 11 and the upper cover 12 are lidded with each other, and the lower case body 11 and the upper cover 12 jointly define an accommodating space for accommodating the battery cell 20. The upper cover 12 may be of a hollow structure with an introduction port at one end, the lower case body 11 may be of a plate-shaped structure, and the introduction port side of the upper cover 12 is lidded with the lower case body 11, such that the lower case body 11 and the upper cover 12 jointly define an accommodating space. The lower case body 11 and the upper cover 12 may also be of hollow structures, each having an introduction opening on one side, and the introduction port side of the upper cover 12 is lidded with the introduction port side of the lower case body 11. Certainly, the lower case body 11 formed by the lower case body 11 and the upper cover 12 may be of various shapes, such as T-shaped or a rectangular parallelepiped-shaped.

In the battery 100, a plurality of battery cells 20 may be provided, and the plurality of battery cells 20 may be connected in series, in parallel, or in series-parallel via busbars. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the lower case body 11. Certainly, the situation may be that in the battery 100, the plurality of battery cells 20 are first connected in series, in parallel, or in series-parallel to form battery modules, and then the plurality of battery modules are connected in series, in parallel, or in series-parallel to form a whole and accommodated in the lower case body 11. The battery 100 may further include other structures. For example, the battery 100 may further include a busbar component for achieving an electrical connection among the plurality of battery cells 20.

Each battery cell 20 may be a secondary battery or a primary battery; it may also be a lithium-sulfur battery, a sodium-ion battery, or a magnesium-ion battery, but is not limited thereto. The battery cell 20 may be cylindrical, flat, rectangular parallelepiped-shaped, or in other shapes.

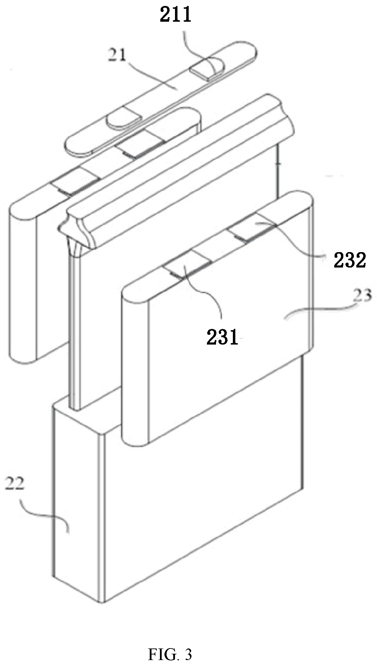

Referring to FIG. 3, FIG. 3 is a schematic view of an exploded structure of a battery cell 20 according to some embodiments of the present application. The battery cell 20 refers to the smallest unit forming a battery. The battery cell 20 includes an end cover 21, a shell 22, an electrode assembly 23, and other functional components.

The end cover 21 refers to a component that is lidded onto the introduction port of the shell 22 to isolate the internal environment of the battery cell 20 from the external environment. Without limitation, the shape of the end cover 21 may be adapted to the shape of the shell 22 to fit the shell 22. Optionally, the end cover 21 may be made of a material with a certain hardness and strength (for example, an aluminum alloy), such that the end cover 21 is not easily deformed when being squeezed or collided. This enables the battery cell 20 to have higher structural strength, and the safety performance can also be improved. Functional components, such as electrode terminals 211, may be disposed on the end cover 21. The electrode terminal 211 may be configured to be electrically connected to the electrode assembly 23 to output or input the electric energy of the battery cell 20. In some embodiments, the end cover 21 may also be provided with a pressure relief mechanism for releasing the internal pressure when the internal pressure or temperature of the battery cell 20 reaches a threshold. The end cover 21 may also be made of a variety of materials, such as copper, iron, aluminum, stainless steel, aluminum alloy, and plastic, which is not specifically limited in the embodiments of the present application. In some embodiments, an insulating member may also be disposed on the inner side of the end cover 21, and the insulating member may be configured to isolate an electrical connection component in the shell 22 from the end cover 21 to reduce the risk of a short circuit. Illustratively, the insulating member may be made of plastic, rubber, or the like.

The shell 22 is a component configured to form the internal environment of the battery cell 20 in combination with the end cover 21. The formed internal environment may be used to accommodate the electrode assembly 23, an electrolytic solution, and other components. The shell 22 and the end cover 21 may be independent components, and an introduction port may be arranged on the shell 22. The introduction port is lidded with the end cover 21 to form the internal environment of the battery cell 20. Without limitation, the end cover 21 and the shell 22 may be integrated. Specifically, the end cover 21 and the shell 22 may form a common connection surface before other components are placed in the shell, and when the interior of the shell 22 needs to be encapsulated, the end cover 21 is lidded onto the shell 22. The shell 22 may be in various shapes and dimensions, such as a rectangular parallelepiped, a cylinder, and a hexagonal prism. Specifically, the shape of the shell 22 may be determined according to the specific shape and dimensions of the electrode assembly 23. The shell 22 may be made of a plurality of materials, such as copper, iron, aluminum, stainless steel, aluminum alloy, and plastic, which is not specifically limited in the embodiments of the present application.

The electrode assembly 23 is a component where the electrochemical reaction occurs in the battery cell 20. One or more electrode assemblies 23 may be accommodated in the shell 22. The electrode assembly 23 is mainly formed by winding or stacking a positive electrode plate and a negative electrode plate, and a separator is generally disposed between the positive electrode plate and the negative electrode plate. The portions of the positive electrode plate and the negative electrode plate that contain the active substance constitute the main body part of the electrode assembly, and the portions of the positive electrode plate and the negative electrode plate that do not contain the active substance each constitute a tab. The positive electrode tab 231 and the negative electrode tab 232 may be located together at one end of the main body part or separately at two ends of the main body part. During the charging and discharging process of the battery, the positive electrode active substance and the negative electrode active substance react with the electrolytic solution, and the tabs are connected to the electrode terminals to form a current circuit.

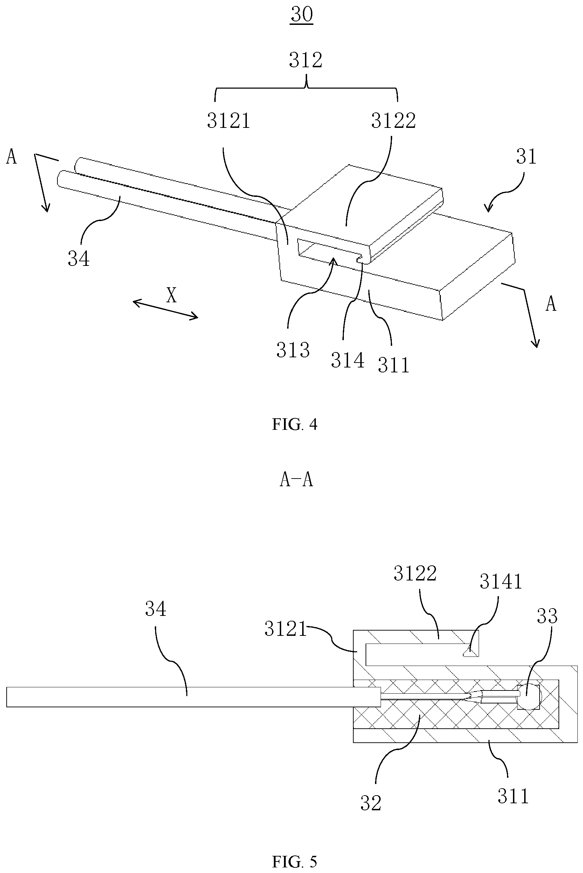

For ease of description, the following embodiments are illustrated with reference to FIGs. 4 to 10 by taking a housing 31 for a temperature sensor 30 according to the present application as an example.

The housing 31 for the temperature sensor 30 includes a body part 311 and a connecting part 312. An accommodating space is formed inside the body part 311, an opening is formed at one end of the body part 311, and the opening is in communication with the accommodating space. The connecting part 312 is located outside the body part 311 and is connected to the body part 311. The connecting part 312 and the body part 311 jointly define, in an enclosing manner, a slot structure 313. A connecting structure 314 is formed on the inner surface of the slot wall of the slot structure 313, and the connecting structure 314 is configured to connect to a target connecting member to limit the movement of the body part 311 in an insertion direction of the slot structure 313 relative to the target connecting member.

Optionally, the body part 311 and the connecting part 312 may be integrally formed. Specifically, the body part 311 and the connecting part 312 may be integrally formed by means of injection molding or welding. The body part 311 and the connecting part 312 may alternatively be connected by, but are not limited to, means such as bonding, riveting, or the like.

Optionally, the body part 311 may be, but is not limited to, structures such as a square box body, a circular box body, or a polygonal box body.

The connecting structure 314 being configured for limiting the movement of the body part 311 in the insertion direction X of the slot structure 313 means that the connecting structure 314 may fasten the body part 311 or the connecting part 312 onto a mounted component, so as to limit the movement of the housing 31 in the insertion direction X of the slot structure 313. The mounted component may be, but is not limited to, a component connected to the housing 31, for example, busbar 40 of the battery.

When the housing 31 for the temperature sensor 30 is applied to the busbar 40 of the battery, the slot structure 313 of the housing 31 is connected to the busbar 40 by means of insertion, and a part of the busbar 40 is located in the slot. Compared with the structure in which the housing 31 is mounted on one side of the busbar 40, this configuration can fully utilize the mounting space on the two sides of the busbar 40 to mount the housing 31, so as to save the mounting space.

In some embodiments, referring to FIGs. 4 and 5, the connecting part 312 includes a first connecting part 3121 and a second connecting part 3122; the first connecting part 3121 is connected to the body part 311, and one end, facing away from the body part 311, of the first connecting part 3121 is connected to the second connecting part 3122; the first connecting part 3121, the second connecting part 3122, and the body part 311 jointly define, in an enclosing manner, the slot structure 313; and in the insertion direction X of the slot structure 313, the connecting structure 314 and the first connecting part 3121 are spaced apart from each other.

The connection method between the first connecting part 3121 and the body part 311 and the connection method between the second connecting part 3122 and the second connecting part 3122 include, but are not limited to, welding, bonding, or integral molding by means of injection molding.

Optionally, the structure formed by the first connecting part 3121 and the second connecting part 3122 may be an L-shaped bent plate.

When the slot structure 313 of the housing 31 is connected to the busbar 40 by means of insertion, the second connecting part 3122 and the body part 311 are located on the two sides of the busbar 40. The second connecting part 3122 may be disposed between the busbar 40 and the insulating cover 50, and the body part 311 may be disposed between the busbar 40 and the battery cell 20; alternatively, the second connecting part 3122 may be disposed between the busbar 40 and the battery cell 20, and the body part 311 may be disposed between the busbar 40 and the insulating cover 50, such that the housing 31 can fully utilize the space on the two sides of the busbar 40, thereby improving the space utilization rate. Meanwhile, the first connecting part 3121 can limit the insertion depth of the slot structure 313. That is, when the slot structure 313 is inserted to the maximum depth, the first connecting part 3121 abuts against one edge of the busbar 40 to enable the housing 31 to be mounted at a predetermined position of the busbar 40, thereby facilitating the connection between the housing 31 and the busbar 40.

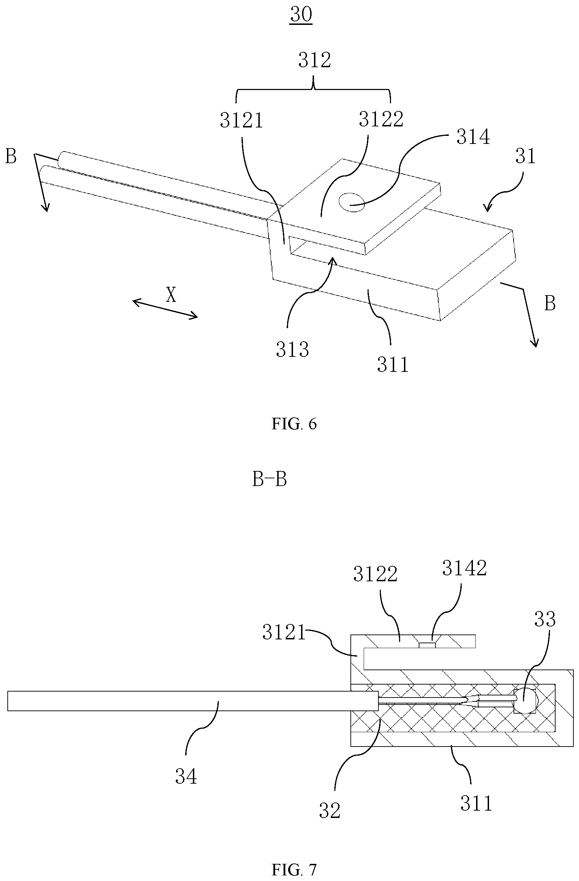

In some embodiments, referring to FIGs. 4 and 6, the connecting structure 314 is formed on a surface, facing the body part 311, of the second connecting part 3122, or the connecting structure 314 is formed on a surface, facing the second connecting part 3122, of the body part 311.

The connecting structure 314 may be a connecting hole 3142 or a snap-fit protrusion 3141.

Compared with the structure in which the connecting structure 314 is formed on the first connecting part 3121, this configuration is more convenient for connecting the connecting structure 314 to the busbar 40 of the battery when applied to the battery.

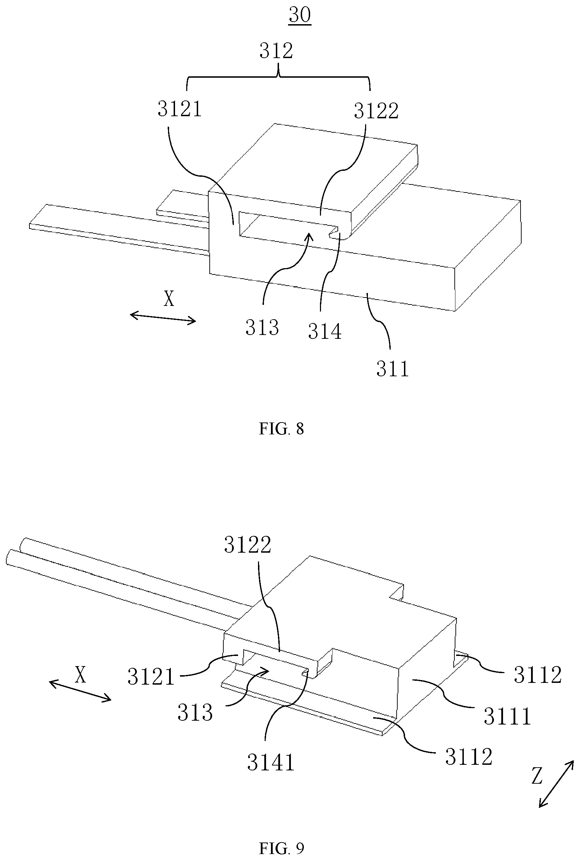

In some embodiments, referring to FIG. 9, the connecting part 312 includes two first connecting parts 3121 and two second connecting parts 3122; the two first connecting parts 3121 are respectively located on two opposite sides of the body part 311, the two second connecting parts 3122 are respectively located on two opposite sides of the body part 311, the two first connecting parts 3121 are respectively connected to the body part 311, and each of the first connecting parts 3121 is connected to the second connecting part 3122; on the same side of the body part 311, the first connecting part 3121, the second connecting part 3122, and the body part 311 jointly define, in an enclosing manner, the slot structure 313; and in the insertion direction X of the slot structure 313, the connecting structure 314 and the first connecting part 3121 are spaced apart from each other.

The connection between each of the two first connecting parts 3121 and the body part 311 includes, but is not limited to, welding, screw connection, bonding, or integral molding by means of injection molding.

When the housing 31 is mounted to the busbar 40, a notch 42 may be provided on one side edge of the busbar 40, and the housing 31 is inserted into the notch 42 via the slot structure 313. When the first connecting part 3121 abuts against the side edge of the busbar 40, the connection with the busbar 40 is achieved via the connecting structure 314, and the connection with the busbar 40 by means of insertion is achieved via the slot structure 313 on two sides of the housing 31. Compared with the structure in which the housing 31 is mounted on one side of the busbar 40, this configuration can fully utilize the space on the two sides of the busbar 40 to mount the housing 31 onto the busbar 40, thereby improving the space utilization rate.

In some embodiments, with continued reference to FIG. 9, the body part 311 includes a first portion 3111 and a second portion 3112; the accommodating space is formed inside the first portion 3111, the second portion 3112 is respectively connected to two sides of the first portion 3111 in a first direction Z, the first direction Z is the same as the spacing direction of the two first connecting parts 3121; on the same side of the body part 311, the first portion 3111, the second portion 3112, the first connecting part 3121, and the second connecting part 3122 jointly define, in an enclosing manner, the slot structure 313; and in the insertion direction X of the slot structure 313, the connecting structure 314 and the first connecting part 3121 are spaced apart from each other.

The connection between the first portion 3111 and the second portion 3112 includes, but is not limited to, welding, bonding, screw connection, integral molding by means of injection molding, or the like.

Therefore, the slot structure 313 formed on two sides of the body part 311 may be connected to the busbar 40 having the notch 42 by means of insertion. In the thickness direction Y of the busbar 40, the two ends of the body part 311 may be respectively located on the two sides of the busbar 40, and the space above and below the busbar 40 can be utilized for mounting the housing 31. Compared with the structure in which the body part 311 is mounted on one side of the busbar 40, this configuration can fully utilize the limited space on the two sides of the busbar 40 to mount the housing 31, thereby improving the space utilization rate.

In some embodiments, the connecting structure 314 is formed on a surface, facing the second portion 3112, of the second connecting part 3122, or the connecting structure 314 is formed on a surface, facing the second connecting part 3122, of the second portion 3112. Compared with the structure in which the housing 31 is mounted on one side of the busbar 40, the configuration can fully utilize the space on the two sides of the busbar 40 to mount the housing 31 on the busbar 40, thereby improving the space utilization rate.

In some embodiments, referring to FIGs. 8 and 9, the connecting structure 314 includes a snap-fit protrusion 3141.

Illustratively, the snap-fit protrusion 3141 is formed at an end part, facing away from the first connecting part 3121, of the second connecting part 3122, and the snap-fit protrusion 3141 and the second connecting part 3122 form a snap-fit structure. In other examples, the snap-fit protrusion 3141 is formed between the first connecting part 3121 and the end part, facing away from the first connecting part 3121, of the second connecting part 3122. During use, a snap groove may be provided on the surface of the busbar 40, and the snap-fit protrusion 3141 can be snapped into the snap groove of the busbar 40 by utilizing the elastic deformation of the second connecting part 3122.

By providing the snap-fit protrusion 3141, rapid assembly and disassembly of the temperature sensor 30 can be achieved, thereby facilitating the maintenance and mounting.

In some embodiments, the material of the connecting part 312 includes an elastic material. Optionally, the material of the connecting part 312 may be stainless steel, copper, plastic, or the like. The second connecting part 3122, the first connecting part 3121, and the body part 311 may be made of the same material, or may be connected by using different materials.

In some embodiments, referring to FIG. 6, the connecting structure 314 includes a connecting hole 3142, the connecting hole 3142 penetrates through the slot wall in which the connecting hole 3142 is located, and the axis of the connecting hole 3142 is arranged at an included angle with respect to the slot wall in which the connecting hole 3142 is located.

Illustratively, the busbar 40 is provided with a threaded hole, and the axis of the threaded hole is the same as the thickness direction Y of the busbar 40. When the slot structure 313 is connected to the busbar 40 by means of insertion, the threaded hole is disposed opposite to the connecting hole 3142, a connecting screw 60 is disposed in the connecting hole 3142, and a threaded connection with the threaded hole is achieved via the connecting screw 60. The connecting screw 60 may be, but is not limited to, a countersunk screw.

The included angle between the axis of the connecting hole and the slot wall in which the connecting hole 3142 is located is greater than 0° and less than or equal to 90°.

Illustratively, the axis of the connecting hole 3142 is substantially perpendicular to the slot wall in which the connecting hole 3142 is located, which facilitates the manufacturing of the connecting hole 3142 and the mounting of the housing 31, and may be specifically determined according to actual application scenarios.

Therefore, the connecting hole 3142 fastens the housing 31 onto the busbar 40 by using a screw, thereby facilitating the mounting and disassembly of the housing 31.

For ease of description, the following embodiments are illustrated with reference to FIGs. 4 to 10 by taking a temperature sensor 30 according to the present application as an example.

The temperature sensor 30 includes a temperature measurement component 33 and the housing 31. The temperature measurement component 33 is disposed in the accommodating space of the housing 31.

The temperature measurement component 33 refers to a component capable of converting temperature into an electrical signal. Illustratively, the temperature measurement component 33 includes a thermistor. Since the resistance value of the thermistor changes with temperature, the correspondence relationship between the temperature and the resistance value can be utilized for temperature measurement.

Optionally, the housing 31 may be made of metal or plastic.

Optionally, the temperature sensor 30 further includes a wire harness 34. The wire harness 34 is electrically connected to the temperature measurement component 33, and the wire harness 34 is configured to transmit signals from the temperature measurement component 33.

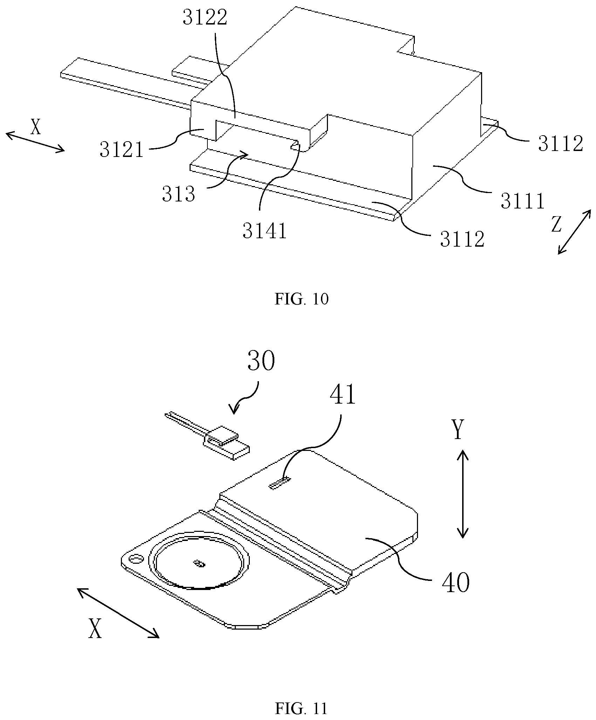

FIGs. 4, 6, and 9 illustrate that the temperature sensor 30 is a single-ended lead-type sensor (with a sensor connecting wire led out from one end), and FIGs. 8 and 10 illustrate that the temperature sensor 30 is a patch-type sensor.

Since the temperature sensor 30 includes all technical features of the housing 31 for the temperature sensor 30 in the above embodiments, the resulting functions are the same as those described above and will not be repeated herein.

In some embodiments, referring to FIG. 5, the temperature sensor 30 further includes an adhesive layer 32, the temperature measurement component 33 and the inner wall of the body part 311 are spaced apart from each other, and the adhesive layer 32 is filled between the temperature measurement component 33 and the inner wall of the body part 311.

Illustratively, the temperature measurement component 33 further includes a circuit board. The circuit board is located in the housing 31, and the space between the circuit board and the housing 31 is filled with the adhesive layer 32 to encapsulate the temperature measurement component 33.

Therefore, the temperature measurement component 33 may be spaced apart from the body part 311 via the adhesive layer 32, thereby protecting the temperature measurement component 33 and enabling the temperature sensor 30 to operate more reliably.

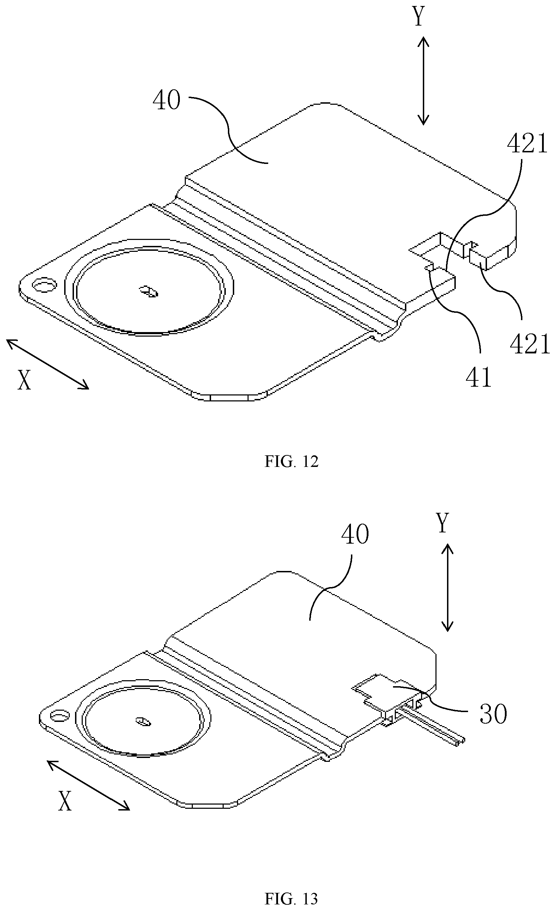

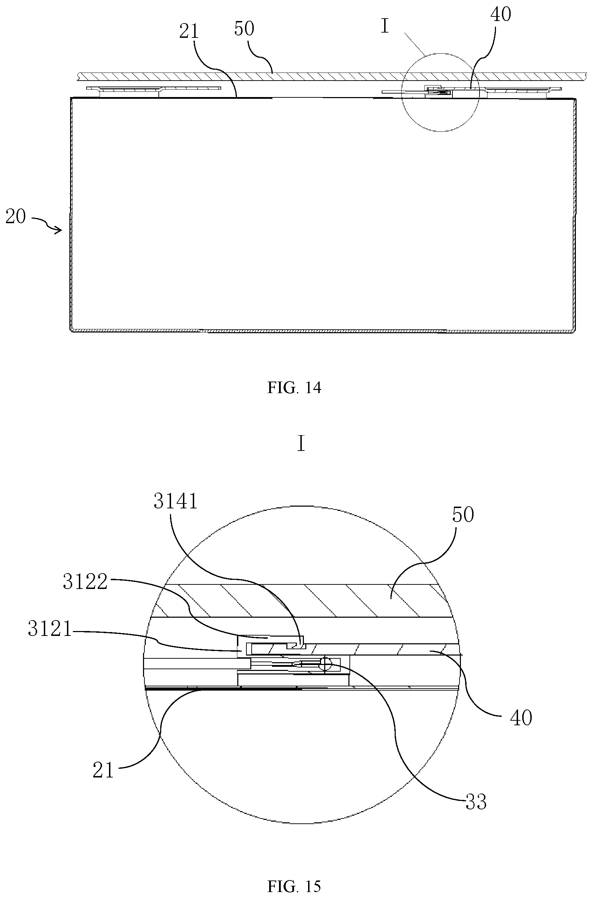

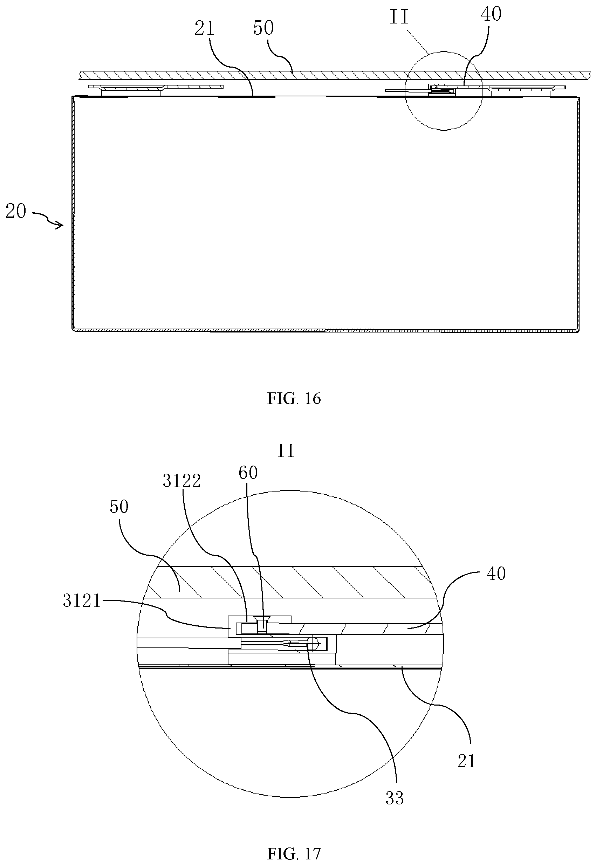

For ease of description, the following embodiments are illustrated with reference to FIGs. 4 to 17 by taking a battery according to the present application as an example.

The battery includes a battery cell 20, a busbar 40, and the temperature sensor 30 according to the above embodiments. The busbar may be used as the target connecting member in the above embodiments, and the busbar 40 is electrically connected to the electrode terminal 211 of the battery cell 20. A part of the busbar 40 is inserted into the slot structure 313 and is connected to the connecting structure 314. The insertion direction X of the slot structure 313 is perpendicular to the thickness direction Y of the busbar 40.

The thickness direction Y of the busbar 40 refers to the thickness direction Y of a part of the busbar 40 that is inserted into the slot structure 313.

The connection between the busbar 40 and the connecting structure 314 includes, but is not limited to, one or a combination of snap-fit connection, screw connection, and bonding.

Since the battery includes all the technical features of the above temperature sensor 30, the resulting effects are the same as those described above and will not be repeated herein.

In some embodiments, referring to FIGs. 4, 9, 11, 12, and 13, the connecting structure 314 includes a snap-fit protrusion 3141, an embedded structure 41 is formed on the surface of the busbar 40 in the thickness direction Y of the busbar 40, and the snap-fit protrusion 3141 is located in the embedded structure 41.

The embedded structure 41 may be a snap-fit hole or a groove, and the embedded structure 41 may accommodate the snap-fit protrusion 3141 and restrict the snap-fit protrusion 3141 therein. Taking the embedded structure 41, being a snap-fit hole, as an example, the snap-fit hole is a rectangular hole, the snap-fit protrusion 3141 is a strip-shaped protrusion, and the strip-shaped protrusion is located in the rectangular hole.

Compared with the method of mounting the housing 31 by means of screw connection, bonding, or the like, the snap-fit connection between the snap-fit protrusion 3141 and the busbar 40 facilitates easier assembly and disassembly.

In some embodiments, referring to FIGs. 4 and 11, the connecting part 312 includes a first connecting part 3121 and a second connecting part 3122; the first connecting part 3121 is connected to the body part 311, and one end, facing away from the body part 311, of the first connecting part 3121 is connected to the second connecting part 3122; the first connecting part 3121, the second connecting part 3122, and the body part 311 jointly define, in an enclosing manner, the slot structure 313; and in the thickness direction Y of the busbar 40, the second connecting part 3122 and the body part 311 are located on the two sides of the busbar 40.

When the slot structure 313 of the housing 31 is connected to the busbar 40 by means of insertion, the second connecting part 3122 and the body part 311 are located on the two sides of the busbar 40. The second connecting part 3122 may be disposed between the busbar 40 and the insulating cover 50, and the body part 311 may be disposed between the busbar 40 and the battery cell 20; alternatively, the second connecting part 3122 may be disposed between the busbar 40 and the battery cell 20, and the body part 311 may be disposed between the busbar 40 and the insulating cover 50, such that the housing 31 can fully utilize the space on the two sides of the busbar 40, thereby improving the space utilization rate. Meanwhile, the first connecting part 3121 can limit the insertion depth of the slot structure 313. That is, when the slot structure 313 is inserted to the maximum depth, the first connecting part 3121 abuts against one edge of the busbar 40 to enable the housing 31 to be mounted at a predetermined position of the busbar 40, thereby facilitating the connection between the housing 31 and the busbar 40.

In some embodiments, referring to FIGs. 9, 12, and 13, a notch 42 is formed at one end of the busbar 40, the side edge of the notch 42 includes two first side edges 421 arranged opposite to each other, each first side edge 421 is provided with the embedded structure 41, and the embedded structure 41 includes a snap groove; the connecting part 312 includes two first connecting parts 3121 and two second connecting parts 3122, the two first connecting parts 3121 are respectively located on two opposite sides of the body part 311, the two second connecting parts 3122 are respectively located on two opposite sides of the body part 311, the two first connecting parts 3121 are respectively connected to the body part 311, and each of the first connecting parts 3121 is connected to the second connecting part 3122; and on the same side of the body part 311, the first connecting part 3121, the second connecting part 3122, and the body part 311 jointly define, in an enclosing manner, the slot structure 313, each of the first side edges 421 is located in the slot structure 313, and the snap-fit protrusion 3141 is located in the snap groove.

When the housing 31 is mounted to the busbar 40, a notch 42 may be provided on one side edge of the busbar 40, and the housing 31 is inserted into the notch 42 via the slot structure 313. When the first connecting part 3121 abuts against the side edge of the busbar 40, the connection with the busbar 40 is achieved via the connecting structure 314, and the connection with the busbar 40 by means of insertion is achieved via the slot structure 313 on two sides of the housing 31. Compared with the structure in which the housing 31 is mounted on one side of the busbar 40, this configuration can fully utilize the space on the two sides of the busbar 40 to mount the housing 31 onto the busbar 40, thereby improving the space utilization rate.

In a first optional embodiment of the battery, referring to FIGs. 4, 11, 14, and 15, the battery includes a temperature sensor 30, a battery cell 20, and a busbar 40. The busbar 40 is electrically connected to the electrode terminal of the battery cell 20. The temperature sensor 30 includes a temperature measurement component 33 and a housing 31. The temperature component is located in the accommodating space of the housing 31 and is spaced apart from all side walls of the housing 31. The adhesive layer 32 is filled between the temperature measurement component 33 and the side walls of the housing 31. The housing 31 includes a body part 311 and a connecting part 312. An accommodating space is formed inside the body part 311, and an opening is formed at one end of the body part 311. The opening is in communication with the accommodating space, and adhesive may be injected into the accommodating space via the opening and be solidified to form the above adhesive layer 32. The connecting part 312 includes a first connecting part 3121 and a second connecting part 3122. The first connecting part 3121 is connected to the body part 311, and one end, facing away from the body part 311, of the first connecting part 3121 is connected to the second connecting part 3122. The first connecting part 3121, the second connecting part 3122, and the body part 311 jointly define, in an enclosing manner, the slot structure 313. In the insertion direction X of the slot structure 313, the connecting structure 314 and the first connecting part 3121 are spaced apart from each other. The connecting structure 314 includes a snap-fit protrusion 3141, the snap-fit protrusion 3141 is formed on the second connecting part 3122, an embedded structure 41 is formed on the surface of the busbar 40, and the snap-fit protrusion 3141 is located in the embedded structure 41.

In a second optional embodiment of the battery, referring to FIGs. 9, 12, and 13, the difference from the first optional embodiment lies in the following: a notch 42 is formed at one end of the busbar 40, the side edge of the notch 42 includes two first side edges 421 arranged opposite to each other, each first side edge 421 is provided with the embedded structure 41, and the embedded structure 41 includes a snap groove; the connecting part 312 includes two first connecting parts 3121 and two second connecting parts 3122, the two first connecting parts 3121 are respectively located on two opposite sides of the body part 311, the two second connecting parts 3122 are respectively located on two opposite sides of the body part 311, the two first connecting parts 3121 are respectively connected to the body part 311, and each of the first connecting parts 3121 is connected to the second connecting part 3122; and on the same side of the body part 311, the first connecting part 3121, the second connecting part 3122, and the body part 311 jointly define, in an enclosing manner, the slot structure 313, each of the first side edges 421 is located in the slot structure 313, and the snap-fit protrusion 3141 is located in the snap groove.

In the above first and second optional embodiments, the connection between the housing 31 and the busbar 40 by means of insertion can be achieved via the slot structure 313, and the snap-fit fixation between the housing 31 and the busbar 40 can be achieved via the snap-fit protrusion 3141. Through this connection method, in one aspect, the narrow space on the two sides of the busbar 40 can be fully utilized for mounting the temperature sensor 30, thereby improving the space utilization rate of the case of the battery, and in another aspect, the assembly and disassembly are facilitated.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A housing for a temperature sensor, comprising:
a body part, wherein an accommodating space is formed inside the body part, an opening is formed at one end of the body part, and the opening is in communication with the accommodating space; and
a connecting part located outside the body part and connected to the body part, wherein the connecting part and the body part jointly define, in an enclosing manner, a slot structure, a connecting structure is formed on an inner surface of a slot wall of the slot structure, and the connecting structure is configured to connect to a target connecting member to limit a movement of the body part in an insertion direction of the slot structure relative to the target connecting member.

2. The housing for the temperature sensor according to claim 1, wherein the connecting part comprises a first connecting part and a second connecting part; the first connecting part is connected to the body part, and one end, facing away from the body part, of the first connecting part is connected to the second connecting part; the first connecting part, the second connecting part, and the body part jointly define, in an enclosing manner, the slot structure; and in the insertion direction of the slot structure, the connecting structure and the first connecting part are spaced apart from each other.

3. The housing for the temperature sensor according to claim 2, wherein the connecting structure is formed on a surface, facing the body part, of the second connecting part, or the connecting structure is formed on a surface, facing the second connecting part, of the body part.

4. The housing for the temperature sensor according to claim 1, wherein the connecting part comprises two first connecting parts and two second connecting parts; the two first connecting parts are respectively located on two opposite sides of the body part, the two second connecting parts are respectively located on two opposite sides of the body part, the two first connecting parts are respectively connected to the body part, and each of the first connecting parts is connected to the second connecting part; on a same side of the body part, the first connecting part, the second connecting part, and the body part jointly define, in an enclosing manner, the slot structure; and in the insertion direction of the slot structure, the connecting structure and the first connecting part are spaced apart from each other.

5. The housing for the temperature sensor according to claim 4, wherein the body part comprises a first portion and a second portion; the accommodating space is formed inside the first portion, the second portion is respectively connected to two sides of the first portion in a first direction, and the first direction is the same as a spacing direction of the two first connecting parts; and on a same side of the body part, the first portion, the second portion, the first connecting part, and the second connecting part jointly define, in an enclosing manner, the slot structure.

6. The housing for the temperature sensor according to claim 5, wherein the connecting structure is formed on a surface, facing the second portion, of the second connecting part, or the connecting structure is formed on a surface, facing the second connecting part, of the second portion.

7. The housing for the temperature sensor according to any one of claims 1 to 6, wherein the connecting structure comprises a snap-fit protrusion;
or the connecting structure comprises a connecting hole, the connecting hole penetrates through the slot wall in which the connecting hole is located, and an axis of the connecting hole is arranged at an included angle with respect to the slot wall in which the connecting hole is located.

8. The housing for the temperature sensor according to any one of claims 1 to 6, wherein a material of the connecting part comprises an elastic material.

9. A temperature sensor, comprising:
a temperature measurement component; and
the housing for the temperature sensor according to any one of claims 1 to 8, wherein the temperature measurement component is disposed in the accommodating space.

10. The temperature sensor according to claim 9, wherein the temperature sensor further comprises an adhesive layer, the temperature measurement component and an inner wall of the body part are spaced apart from each other, and an adhesive layer is filled between the temperature measurement component and the inner wall of the body part.

11. A battery, comprising:
a battery cell;
a busbar, wherein the busbar is the target connecting member and is electrically connected to an electrode terminal of the battery cell; and
the temperature sensor according to claim 9 or 10, wherein a part of the busbar is inserted into the slot structure and connected to the connecting structure, and the insertion direction of the slot structure is perpendicular to a thickness direction of the busbar.

12. The battery according to claim 11, wherein the connecting structure comprises a snap-fit protrusion, an embedded structure is formed on a surface of the busbar in the thickness direction of the busbar, and the snap-fit protrusion is located in the embedded structure.

13. The battery according to claim 12, wherein the connecting part comprises a first connecting part and a second connecting part; the first connecting part is connected to the body part, and one end, facing away from the body part, of the first connecting part is connected to the second connecting part; the first connecting part, the second connecting part, and the body part jointly define, in an enclosing manner, the slot structure; and in the thickness direction of the busbar, the second connecting part and the body part are located on two sides of the busbar.

14. The battery according to claim 12, wherein a notch is formed at one end of the busbar, a side edge of the notch comprises two first side edges arranged opposite to each other, each first side edge is provided with the embedded structure, and the embedded structure comprises a snap groove; the connecting part comprises two first connecting parts and two second connecting parts, the two first connecting parts are respectively located on two opposite sides of the body part, the two second connecting parts are respectively located on two opposite sides of the body part, the two first connecting parts are respectively connected to the body part, and each of the first connecting parts is connected to the second connecting part; and on a same side of the body part, the first connecting part, the second connecting part, and the body part jointly define, in an enclosing manner, the slot structure, each of the first side edges is located in the slot structure, and the snap-fit protrusion is located in the snap groove.

15. An electric device, comprising the battery according to any one of claims 11 to 14, wherein the battery is configured to provide electric energy for the electric device.
